# EUROPÄISCHE PATENTSCHRIFT

(11) **EP 3 102 513 B1**
(45) Veröffentlichungstag und Bekanntmachung des Hinweises auf die Patenterteilung: **17.10.2018**
(21) Anmeldenummer: 15710706.1
(22) Anmeldetag: 04.02.2015
(51) Int. Cl.: B65G 47/52, B65G 47/90

(54) **ZUTEILER ZUM ZUTEILEN VON SCHNITTHOLZTEILEN**
FEEDER FOR FEEDING CUT PIECES OF WOOD
DISPOSITIF D'ACHEMINEMENT POUR ACHEMINER DES PIÈCES DE BOIS COUPÉES

(30) Priorität: 07.02.2014 AT 902014
(43) Veröffentlichungstag der Anmeldung: 14.12.2016
(73) Patentinhaber: Springer Maschinenfabrik GmbH, 9360 Friesach (AT)
(72) Erfinder: EBNER, Franz, AT-9841 Winklern (AT)
(74) Vertreter: Gibler & Poth Patentanwälte KG
(86) Internationale Anmeldenummer: PCT/AT2015/000017
(87) Internationale Veröffentlichungsnummer: WO 2015/117171

(56) Entgegenhaltungen:
- EP-A1- 2 163 498
- CA-A1- 2 271 175
- DE-A1-102005 019 734
- FR-A1- 2 676 955
- JP-A- S5 296 194
- US-A- 3 923 142
- US-A- 5 921 376

## Beschreibung

Die Erfindung betrifft einen Zuteiler zum Zuteilen von Schnittholzteilen von einem Stauförderer zu einem Mitnehmerförderer gemäß dem Oberbegriff des Patentanspruches 1.
Das Zuteilen ist ein Prozessschritt bei der Holzverarbeitung, bei welcher Schnittholzteile, beispielsweise Schnittholzbretter, von einer ungetakteten Förderung in eine taktgebundene Förderung übergeführt werden. Hierbei liegen die Schnittholzteile in der ungetakteten Förderung als angestauter Film von aneinanderliegenden Schnittholzteilen vor, wobei die Schnittholzteile durch den Zuteiler einzeln an einen Mitnehmerförderer übergeben werden, wobei pro Mitnehmer des Mitnehmerförderers ein Schnittholzteil zugeordnet werden soll. Herkömmliche Zuteiler können hierbei betätigbare Rollen, Hebetische oder Sternräder aufweisen, welche im Takt den Mitnehmern des Mitnehmerförderers einzelne Schnittholzteile übergeben.
Aus der US 5 921 376 A ist ein Zuteiler mit einer rotierenden Scheibe bekannt, welche zwischen einem Stauförderer und einem Mitnehmerförderer angeordnet ist. An der Scheibe sind eine Vielzahl an Klemmvorrichtungen umfassend zwei Klemmbacken angebracht, welche bei einer Drehung der Scheibe durch eine Nockensteuerung derart gesteuert werden, dass sich diese bei dem Stauförderer schließend, derart ein Schnittholzteil einklemmen, um sich dann vor dem Erreichen des Mitnehmerförderers wieder zu öffnen, um das Schnittholzteil an den Mitnehmerförderer zu übergeben.

Aus der EP 2 163 498 A1 sind eine Vorrichtung, gemäß dem Oberbegriff des Anspruchs 1, sowie ein Verfahren gemäß dem Oberbegriff des Anspruchs 9, welche einzelne Stückgüter, beispielsweise verpackte Lebensmittel, Chemikalien oder Medikamente, transportiert, sortiert, wendet oder dergleichen, bekannt. Hierbei sind zwei senkrechte Klemmplatten an einer über einem Förderbereich angeordneten Bewegungsvorrichtung befestigt, wobei die Bewegungsvorrichtung zwei normal zueinander stehende Linearführungen aufweist.
Aus der FR 2 676 955 A1 ist eine Vorrichtung zum Transport einzelner Stückgüter mit zwei unabhängig voneinander bewegbaren Platten bekannt, welche zusammen einen Greifer ausbilden.

Aus der DE 10 2005 019734 A1 ist ein Zuteiler bekannt, wobei die Schnittholzteile auf einer Rollenauflage zu einer geschlossenen Schicht aufgestaut werden.

Aus der JP S52 96194 A ist eine Vorrichtung bekannt, bei welcher Stückgüter von einem Förderband auf eine Hebebühne gestapelt werden.

Aus der US 3 923 142 A und der CA 2 271 175 A1 sind Zuteiler mit einer rotierenden Scheibe bekannt, welche zwischen einem Stauförderer und einem Mitnehmerförderer angeordnet ist. An der Scheibe sind eine Vielzahl an Auflagen angeordnet, deren Orientierung über eine Nockensteuerung vorgebbar ist. Gegenüber von der Scheibe ist ein Sternrad mit gefederten Enden angeordnet, welche die Schnittholzteile gegen die Auflagen drücken.

Nachteilig daran ist, dass beim Zuteilen die Schnittholzteile stark beschleunigt werden müssen, wobei es durch die unterschiedlichen Geometrien und durch die Inhomogenität des Werkstücks häufig zu verschiedenen Beschleunigungsbewegungen der Schnittholzteile kommt, da die Schnittholzteile in den physikalischen Eigenschaften voneinander zum Teil stark differieren, oder ein Schnittholzteil vom Zuteiler nicht vollständig erfasst wird. Dadurch kommt es zu nicht parallel geführten Bewegungen der Schnittholzteile, welche in der nachfolgenden Übergabe in den Mitnehmerförderer eine inkorrekte Einlagerung verursacht und diese manuell wieder korrigiert werden muss. Dies führt zu einer erhöhten Störanfälligkeit im Bereich des Zuteilers, vor allem bei steigender Taktzahl.

Aufgabe der Erfindung ist es daher einen Zuteiler der eingangs genannten Art anzugeben, mit welchem die genannten Nachteile vermieden werden können, mit welchem ein Zuteilen der Schnittholzteile von einem Stauförderer zu einem Mitnehmerförderer auch bei hohen Taktraten zuverlässig erfolgen kann.

Erfindungsgemäß wird dies durch die Merkmale des Patentanspruches 1 erreicht.

Dadurch ergibt sich der Vorteil, dass das Zuteilen von Schnittholzteilen auch bei hohen Taktraten und damit verbunden auch bei hohen Beschleunigungen zuverlässig erfolgt, da das einzelne Schnittholzteil beim Zuteilen eingeklemmt und damit in seiner Bewegungsfreiheit eingeschränkt wird. Hierbei kann das Schnittholzteil durch die beiden Klemmbacken eingeklemmt und in diesem eingeklemmten Zustand beschleunigt und geordnet an den Mitnehmerförderer weitergegeben werden. Durch die zwangsgeführte Beschleunigung der Schnittholzteile wird eine geringe Störanfälligkeit des Zuteilvorgangs erzielt und damit verbunden ein sehr hoher Anlagenwirkungsgrad erreicht.

Die Erfindung betrifft weiters ein Zuteilsystem gemäß dem Oberbegriff des Patentanspruches 5 mit diesem Zuteiler.

Weiters betrifft die Erfindung ein Verfahren zum Zuteilen von Schnittholzteilen mit einem Zuteiler gemäß dem Patentanspruch 9.

Aufgabe der Erfindung ist es daher weiters ein zum Zuteilen von Schnittholzteilen mit einem Zuteiler anzugeben, mit welchem die genannten Nachteile vermieden werden können, mit welchem ein Zuteilen der Schnittholzteile von einem Stauförderer zu einem Mitnehmerförderer auch bei hohen Taktraten zuverlässig erfolgen kann.

Die Vorteile des Verfahrens entsprechen den Vorteilen des Zuteilers.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine erste bevorzugte Ausführungsform eines Zuteilersystems in Seitenansicht;
Fig. 2 ein Teil der erste bevorzugten Ausführungsform des Zuteilersystems als axonometrischen Darstellung; und
Fig. 3 eine zweite bevorzugte Ausführungsform eines Zuteilersystems in Seitenansicht.

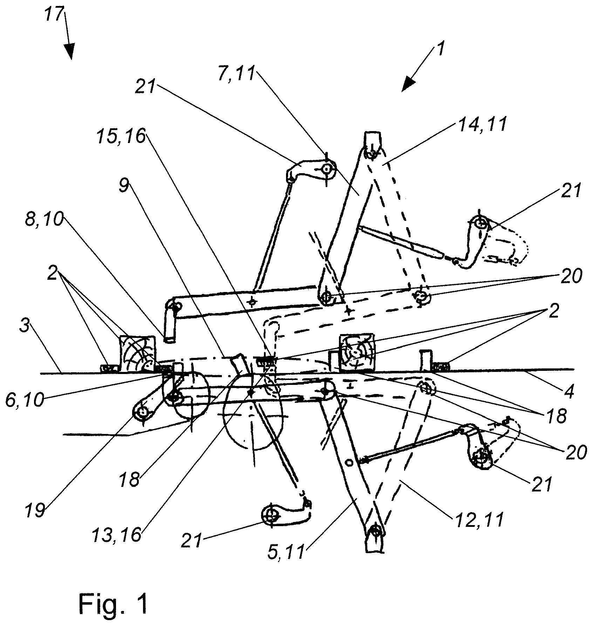

Die Fig. 1 bis 3 zeigen bevorzugte Ausführungsformen eines Zuteiler 1 zum Zuteilen von Schnittholzteilen 2 von einem Stauförderer 3 zu einem Mitnehmerförderer 4. Ein Zuteiler 1 ist eine Vorrichtung in der Holzverarbeitung, bei welche Schnittholzteile, insbesondere Schnittware und/oder Schnittholzbretter, von einer ungetakteten Förderung, insbesondere in Form eines Stauförderers 3, in eine taktgebundene Förderung, insbesondere in Form eines Mitnehmerförderers 4, übergeführt, wobei einzelne Schnittholzteile gezielt an von dem Stauförderer 3 an den Mitnehmerförderer 4 übergeben werden.

Vorgesehen ist, dass der Zuteiler 1 eine, an einer ersten Bewegungsvorrichtung 5 angeordnete, erste Klemmbacke 6 und eine, an einer zweiten Bewegungsvorrichtung 7 angeordnete, zweite Klemmbacke 8 aufweist, und dass die erste Klemmbacke 6 und die zweite Klemmbacke 8 eine Klemmeinheit 10 ausbilden, um ein Schnittholzteil 2 in einem Förderbereich 9 einzuklemmen und durch eine gleichgerichtete Bewegung der ersten Klemmbacke 6 und der zweiten Klemmbacke 8 in einem eingeklemmten Zustand zu transportieren.

Dadurch ergibt sich der Vorteil, dass das Zuteilen von Schnittholzteilen auch bei hohen Taktraten und damit verbunden auch bei hohen Beschleunigungen zuverlässig erfolgt, da das einzelne Schnittholzteil 2 beim Zuteilen eingeklemmt und damit in seiner Bewegungsfreiheit eingeschränkt wird beziehungsweise die Zuteilung in der Bewegungsrichtung definiert erfolgt. Hierbei kann das Schnittholzteil 2 durch die beiden Klemmbacken 6,8 eingeklemmt und in diesem eingeklemmten Zustand beschleunigt und geordnet an den Mitnehmerförderer 4 weitergegeben werden. Durch die zwangsgeführte Beschleunigung der Schnittholzteile 2 wird eine geringe Störanfälligkeit des Zuteilvorgangs erzielt und damit verbunden ein sehr hoher Anlagenwirkungsgrad erreicht.

Weiters ist ein Zuteilsystem 17 umfassend einen Stauförderer 3 und einen Mitnehmerförderer 4 vorgesehen, wobei der Zuteiler 1 zwischen dem Stauförderer 3 und dem Mitnehmerförderer 4 angeordnet ist, um ein Schnittholzteil 2 von dem Stauförderer 3 zu dem Mitnehmerförderer 4 zu transportieren. Der Förderbereich 9 reicht hierbei vom Stauförderer 3, wo die Schnittholzteile 2 vom Zuteiler 1 aufgegriffen werden, bis zum Mitnehmerförderer 4, wo die Schnittholzteile 2 vom Zuteiler 1 wieder freigegeben werden. Der Mitnehmerförderer 4 kann insbesondere eine Vielzahl an Mitnehmern 18 aufweisen, wobei pro Mitnehmer 18 ein Schnittholzteil 2 zugeteilt werden soll.

Insbesondere kann vorgesehen sein, dass der Stauförderer 3 und/oder der Mitnehmerförderer 4 als Querförderer ausgebildet sind, also das Schnittholzteil 2 quer zu seiner Längserstreckung transportieren.

Weiters ist ein Verfahren zum Zuteilen von Schnittholzteilen 2 mit dem Zuteiler 1 vorgesehen, wobei das Schnittholzteil 2 in einem Aufgriffbereich des Förderbereiches 9 zwischen der, an der ersten Bewegungsvorrichtung 5 angeordneten, ersten Klemmbacke 6 und der, an der zweiten Bewegungsvorrichtung 7 angeordneten, zweiten Klemmbacke 8 eingeklemmt wird, wobei das Schnittholzteil 2 durch eine gleichgerichtete Bewegung der ersten Klemmbacke 6 und der zweiten Klemmbacke 8 in einem eingeklemmten Zustand durch den Förderbereich 9 transportiert und in einem Absetzbereich des Förderbereiches 9 wieder freigegeben wird.

Die Klemmbacken 6,8 sind vorgesehen das Schnittholzteil 2 zwischen ihnen einzuklemmen und damit festzuhalten. Die erste Klemmbacke 6 und die zweite Klemmbacke 8 bilden zusammen eine Klemmeinheit 10, welche vorgesehen ist ein einzelnes Schnittholzteil 2 einzuklemmen. Hierbei kann die erste Klemmbacke 6 eine erste Klemmfläche aufweisen und die zweite Klemmbacke 8 eine zweite Klemmfläche aufweisen, wobei zumindest im Klemmzustand die erste Klemmfläche parallel zu der zweiten Klemmfläche angeordnet ist, und weiters besonders bevorzugt die erste Klemmfläche genau gegenüber von der zweiten Klemmfläche angeordnet ist

Die erste Klemmbacke 6 ist durch eine erste Bewegungsvorrichtung 5 vorgebbar bewegbar angeordnet, und die zweite Klemmbacke 8 ist durch eine zweite Bewegungsvorrichtung 7 vorgebbar bewegbar angeordnet. Hierbei können insbesondere die jeweiligen Klemmbacken 6,8 fest an der jeweiligen Bewegungsvorrichtung 5,7 angeordnet sein, wobei die Klemmkraft für die Klemmbacken 6,8 von den Bewegungsvorrichtungen 5,7 erzeugt werden und über die Klemmbacken 6,8 an das Schnittholzteil weitergeleitet werden.

Das Einklemmen des Schnittholzteiles 2 erfolgt besonders bevorzugt durch eine gerade Relativbewegung der ersten Klemmbacke 6 und der zweiten Klemmbacke 8 zueinander, wobei besonders bevorzugt die beiden Klemmflächen parallel zueinander verbleiben.

Insbesondere kann vorgesehen sein, dass beim Einklemmen sich die Klemmbacken 6,8 normal auf eine Oberfläche des Schnittholzteiles 2 zubewegen, also beim Einklemmen keine seitliche Bewegungskomponente relativ zum Schnittholzteil 2 vorkommt. Dadurch kommt es zu einer kontrollierten und gut steuerbaren Einklemmung an gut definierbaren Punkten, ohne dass das Schnittholzteil 2 beim Einklemmen bereits beschleunigt wird, ohne komplett eingeklemmt zu sein.

Weiters kann vorgesehen sein, dass das Schnittholzteil 2 erst nach komplett erfolgter Einklemmung durch die Klemmbacken 6,8 durch die Bewegungsvorrichtungen 5,7 beschleunigt wird.

Weiters kann bevorzugt vorgesehen sein, dass die Klemmeinheit 10 eine vorgebbare Mehrzahl an ersten Klemmbacken 6 und zweiten Klemmbacken 8 aufweist, und dass die ersten Klemmbacken 6 entlang einer Quererstreckung des Zuteilers 1 angeordnet sind und sich parallel miteinander bewegen. Hierbei können die einzelnen Klemmbacken 6,8 insbesondere an jeweils einer eigenen Bewegungsvorrichtung 5,7 angeordnet sein. Die Quererstreckung Zuteilers 1 ist parallel zu der Längserstreckung des Schnittholzteiles 2. Dadurch kann ein einzelnes Schnittholzteil 2 von mehreren Klemmbacken 6,8 eingeklemmt und zuverlässig transportiert werden.

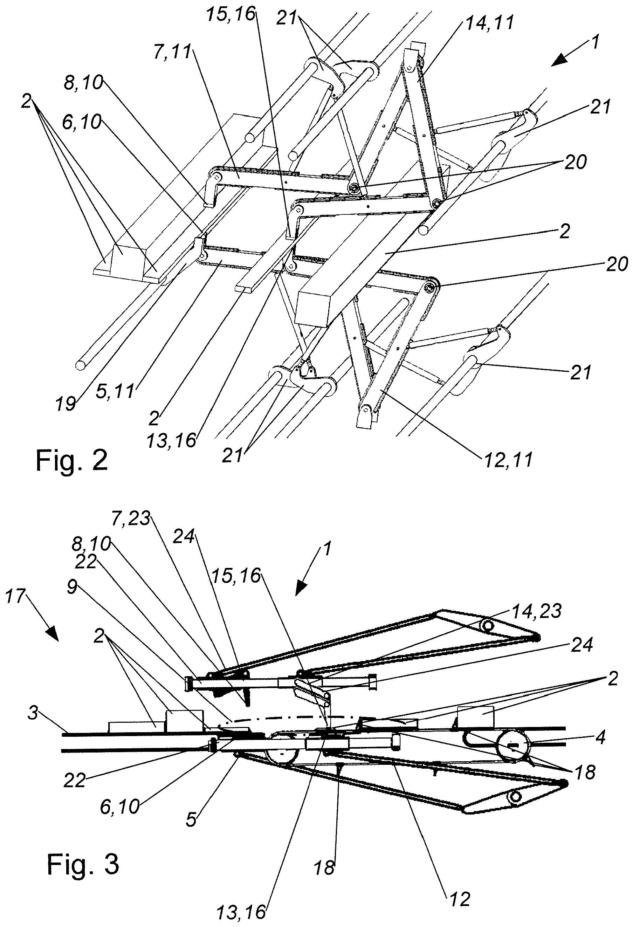

Alternativ kann vorgesehen sein, dass die Klemmeinheit 10 jeweils eine erste Klemmbacke 6 und eine zweite Klemmbacke 8 umfasst, welche insbesondere das Schnittholzteil 2 mittig einklemmen. Durch die mittige Einklemmung werden die Drehmomente des Schnittholzteils 2 beim beschleunigen gering gehalten. Eine derartige Ausführungsform ist in der Fig. 2 dargestellt.

Der Förderbereich 9 ist jener räumliche Bereich, welche von den Schnittholzteilen 2 beim Transport gequert wird. Hierbei ist der Aufgriffbereich, also der Bereich an dem der Zuteiler 1 ein einzelnes Schnittholzteil 2 einklemmt, an einem ersten Ende des Förderbereichs und der Absetzbereich, also der Bereich an dem der Zuteiler 1 das einzelne Schnittholzteil 2 wieder freigibt, dem ersten Ende gegenüberliegenden, zweiten Ende des Förderbereichs angeordnet.

Insbesondere kann vorgesehen sein, dass die Bewegungsvorrichtungen 5,7 zumindest bei deren Rückführung, also einer Bewegung von dem Absetzbereich zu dem Aufgriffbereich, bevorzugt im Betrieb, außerhalb des Förderbereiches 9 verbleiben, wodurch eine zurückeilende Bewegungsvorrichtung 5,7 nicht mit einem transportierten Schnittholzteil 2 kollidieren kann.

Insbesondere kann vorgesehen sein, dass der Zuteiler 1 als Querförderer ausgebildet ist, und dass die erste Klemmfläche und die zweite Klemmfläche im eingeklemmten Zustand des Schnittholzteils 2 parallel zu der Quererstreckung des Zuteilers 1 orientiert sind. Die erste Klemmfläche und die zweite Klemmfläche können hierbei - in Betriebslage gesehen - horizontal angeordnet sein, also parallel zu einer in den Fig. nicht dargestellten Aufstandsfläche des Zuteilers 1. Dadurch können einfach mehrere Klemmeinheiten 10,16 nebeneinander bewegt werden, ohne sich gegenseitig zu behindern, da diese einfach an unterschiedlichen Stellen entlang der Längserstreckung des Schnittholzteils 2 zugreifen können.

Bevorzugt kann vorgesehen sein, dass der Förderbereich 9 zwischen der ersten Bewegungsvorrichtung 5 und der zweiten Bewegungsvorrichtung 7 angeordnet ist. Durch die Anordnung der Bewegungsvorrichtungen 5,7 an beiden Seiten des Förderbereiches 9 können Schnittholzstücke 2 unterschiedlichster Größen auch bei hohen Taktraten zuverlässig eingeklemmt und so zugeteilt werden. Da die Bewegungsvorrichtungen 5,7 in den Förderbereich 9 nicht eingreifen, können weiters einfach eine Vielzahl an Bewegungsvorrichtungen 5,7,12,14 und Klemmbacken 6,8,13,15 verwendet werden, ohne dass sich diese gegenseitig blockieren. Dabei kann ebenfalls eine Erhöhung der Taktrate erreicht werden.

Erfindungsgemäß ist vorgesehen, dass - in Betriebslage gesehen - die erste Bewegungsvorrichtung 5 unterhalb des Förderbereiches 9 angeordnet ist, und dass insbesondere die zweite Bewegungsvorrichtung 7 oberhalb des Förderbereiches 9 angeordnet ist. Dies hat den Vorteil, dass zumindest für die erste Bewegungsvorrichtung 5 gut vorhersehbar ist, wann die erste Klemmbacke 6 mit dem Schnittholzteil 6 in Kontakt kommt.
Gemäß einer nicht dargestellten Ausführungsform kann vorgesehen sein, dass die erste Bewegungsvorrichtung 5 unterhalb des Förderbereiches 9 angeordnet ist, und dass die zweite Bewegungsvorrichtung 7 bei einer Rückbewegung ebenfalls unterhalb des Förderbereiches 9 angeordnet ist, und zum Einklemmen des Schnittholzteils 2 den Förderbereich 9 im Aufgriffbereich durchdringt, damit die zweite Klemmbacke 8 das Schnittholzteil 2 von oben gegen die erste Klemmbacke 6 pressen kann. Im Absetzbereich wird die zweite Bewegungsvorrichtung 7, wenn das Schnittholzteil 2 freigegeben wurde, wieder vollständig aus dem Förderbereich 9 bewegt, damit die zweite Bewegungsvorrichtung 7 kein Hindernis im Förderbereiches 9 darstellt. Vorteilhaft an dieser Ausführungsform ist, dass der Zuteiler kompakt ausgebildet sein kann, da auf einen Aufbau über dem Förderbereich 9 verzichtet werden kann.
Es kann insbesondere vorgesehen sein, dass die Bewegungsvorrichtungen 5, 7 im Betrieb ständig außerhalb des Förderbereiches 9 angeordnet sind. Dies kann erreicht werden, indem die Bewegungsvorrichtungen 5, 7 zur Gänze an gegenüberliegenden Seiten des Förderbereiches 9 angeordnet sind. Dies ist beispielhaft in den bevorzugten Ausführungsformen der Fig. 1 bis 3 sichtbar.
Durch die Klemmeinheit 10 wird das Schnittholzteil 2 im Förderbereich 9 eingeklemmt und durch eine gleichgerichtete Bewegung der ersten Klemmbacke 6 und der zweiten Klemmbacke 8 in dem eingeklemmten Zustand beschleunigt und transportiert. Die gleichgerichtete Bewegung bedeutet in diesem Sinne, dass die erste Klemmbacke 6 und die zweite Klemmbacke 8 beim Transport die relative Lage und Orientierung zueinander nicht verändern.
Hierbei kann vorgesehen sein, dass in dem Aufgriffbereich durch eine Bewegung der ersten Bewegungsvorrichtung 5 und der zweiten Bewegungsvorrichtung 7 die erste Klemmfläche und die zweite Klemmfläche aufeinander in eine Klemmposition zubewegbar sind, um ein einzelnes Schnittholzteil 2 zwischen der erste Klemmfläche und die zweite Klemmfläche einzuklemmen.
Weiters kann vorgesehen sein, und dass in dem Absetzbereich die erste Klemmfläche und die zweite Klemmfläche durch eine Bewegung der ersten Bewegungsvorrichtung 5 und der zweiten Bewegungsvorrichtung 7 voneinander in eine Freigabeposition wegbewegbar sind, um das eingeklemmte Schnittholzteil 2 im Absetzbereich freizugeben.
Nach Freigabe des Schnittholzteiles 2 werden die Klemmbacken 6,8 durch die Bewegungsvorrichtungen 5,7 wieder zu dem Aufgriffbereich gebracht. Durch die Anordnung der Bewegungsvorrichtungen 5,7 außerhalb des Förderbereiches 9 kann diese Rückführung besonders schnell erfolgen.

Erfindungsgemäß ist vorgesehen, dass der Förderbereich 9 im Wesentlichen eben ist. Dies bedeutet, dass das Schnittholzteil 2 in dem eingeklemmten Zustand im Wesentlichen in einer Ebene, also translatorisch entlang einer Geraden, beschleunigt und transportiert wird. Dadurch ergibt sich der Vorteil, dass beim Transport des Schnittholzteiles 2 keine Drehmomente entstehen, welche die Schnittholzteile aus der Einklemmung befreien könnten.
Der Förderbereich 9 kann im Wesentlichen waagrecht angeordnet sein.
Hierbei können besonders bevorzugt beim Transport des Schnittholzteiles 2 die erste Klemmfläche und die zweite Klemmfläche in jeweils einer parallel verlaufenden Ebene verbleiben.
Besonders bevorzugt kann vorgesehen sein, dass eine Beschleunigung des Schnittholzteiles 2 beim Zuteilen ausschließlich im durch die erste Klemmbacke 6 und die zweite Klemmbacke 8 eingeklemmten Zustand erfolgt.
Besonders bevorzugt kann vorgesehen sein, dass sich ein Mitnehmer 18 des Mitnehmerförderers 4 in einem Absetzbereich des Förderbereiches 9 mit einer Mitnehmergeschwindigkeit bewegt, und dass die Klemmeinheit 10 das Schnittholzteil 2 im Absetzbereich bei einer parallel zum Mitnehmer 18 erfolgenden Bewegung freigibt.

Hierbei kann vorgesehen sein, dass sich der Mitnehmer 18 des Mitnehmerförderers 4 in dem Absetzbereich des Förderbereiches 9 mit der Mitnehmergeschwindigkeit bewegt, und dass das Schnittholzteil 2 im eingeklemmten Zustand auf die Mitnehmergeschwindigkeit beschleunigt wird und an den Mitnehmer 18 übergeben wird, und anschließend von der ersten Klemmbacke 6 und der zweiten Klemmbacke 8 freigegeben wird. Hierbei kann insbesondere vorgesehen sein, dass das Schnittholzteil 2 an den Mitnehmer 18 bereits angelehnt ist, bevor das Schnittholzteil 2 von der Klemmeinheit 10 freigegeben wird. Dadurch kann die Übergabe des Schnittholzteiles 2 an den Mitnehmerförderer 4 ohne eine Beschleunigung des Schnittholzteiles 2 im uneingeklemmten Zustand erfolgen.

Der Stauförderer 3 kann insbesondere als ein Förderband und/oder ein Rollenband ausgebildet sein, bei welchen die einzelnen Schnittholzteile 2 bis zu einem Anschlag, welcher bereits im Förderbereich 9, insbesondere im Aufgriffbereich, angeordnet ist, transportiert werden. An diesem Anschlag liegen die Schnittholzteile 2 aneinander an und werden aufgestaut.

Bevorzugt kann vorgesehen sein, dass der Stauförderer 3 dem Aufgriffbereich des Förderbereiches 9 ein, mit dem Zuteiler 1 wirkverbundenes, Sensorsystem aufweist, und dass eine Einklemmbewegung der Klemmeinheit 10 nur dann erfolgt, wenn vom Sensorsystem ein Schnittholzteil 2 im Aufgriffbereich erfasst ist. Bevorzugt kann vorgesehen sein, dass das Sensorsystem mit einer, die Bewegungsvorrichtungen steuernde, Steuervorrichtung des Zuteilers 1 wirkverbunden ist. Das Sensorsystem kann insbesondere als eine Lichtschrankenanlage ausgebildet sein. Durch das Sensorsystem kann sichergestellt werden, dass tatsächlich ein Schnittholzteil im Aufgriffbereich angeordnet ist, welches von den Klemmbacken 6,8 erfasst werden kann.

Weiters kann vorgesehen sein, dass das Sensorsystem eine - in Betriebslage in Höhenrichtung verlaufende - Höhe eines im Aufgriffbereich angeordneten Schnittholzteiles 2 misst, und diese gemessene Höhe an den Zuteiler 1, insbesondere die Steuervorrichtung, weiterleitet. Durch die Information der Höhe des einzuklemmenden Schnittholzteiles können die Klemmbacken 6,8 gezielt auf die jeweilige Höhe zugesteuert werden, wobei Schnittholzteile 1 mit einer weiten Variation der Breite schnell und zuverlässig zugeteilt werden können.

Weiters kann vorgesehen sein, dass wenigstens eine der Klemmbacken 6,8 und/oder wenigstens eine der Bewegungsvorrichtungen 5,7 einen Druckaufnehmer aufweist. Der Druckaufnehmer kann insbesondere mit der Steuereinheit verbunden sein. Durch den Druckaufnehmer kann eine vorgegebene Einklemmkraft der Klemmbacken 6,8 erreicht werden.

Der Druckaufnehmer kann insbesondere in einem Dämpfungselement angeordnet sein. Dabei kann vorgesehen sein, dass das Dämpfungselement zwischen der ersten Klemmbacke 6 und/oder der zweiten Klemmbacke 8 und der zugeordneten Bewegungsvorrichtung 5,7 angeordnet ist.

Besonders bevorzugt kann vorgesehen sein, dass der Stauförderer 3 in einem Aufgriffbereich des Förderbereiches 9 einen beweglichen Stauförderrückhaltehaken 19 umfasst. Der Stauförderrückhaltehaken 19 bildet hierbei einen vorgebbar entfernbaren Anschlag für den Stauförderer 3. Hierbei wird ein Schnittholzteil 2 vom Stauförderer 3 transportiert, bis am Stauförderrückhaltehaken 19 anliegt. Dann wird dieses Schnittholzteil 2 vom Zuteiler eingeklemmt und der Stauförderrückhaltehaken 19 wird aus einer Rückhalteposition wegbewegt, wobei dieser das eingeklemmte Schnittholzteil 2 freigibt, welches dann vom Zuteiler 1, bevorzugt horizontal, abtransportiert wird. Danach wird der Stauförderrückhaltehaken 19 wieder in die Rückhalteposition bewegt, um nachfolgende Schnittholzteile 2 des Stauförderers 3 rückzuhalten. Vorteilhaft am beweglichen Stauförderrückhaltehaken 19 ist, dass der Zuteiler 1 das eingeklemmte Schnittholzstück 2 nicht über den Anschlag heben muss, wodurch ein Drehmoment erzeugt werden würde. Durch den Stauförderrückhaltehaken 19 kann der Anschlag weiters besonders hoch ausgebildet werden, wodurch ein am Anschlag auftreffendes Schnittholzstück mit größer Höhe sich nicht über den Anschlag hinwegdrehen kann.

Alternativ kann ein fester Anschlag vorgesehen sein, wobei der Zuteiler 1 das Schnittholzteil 2 über diesen hinweg hebt.

Erfindungsgemäß ist vorgesehen, dass die erste Bewegungsvorrichtung 5 und/oder die zweite Bewegungsvorrichtung 7 als gelenkiger Arm 11 ausgebildet sind. Insbesondere kann die erste Bewegungsvorrichtung 5 und/oder die zweite Bewegungsvorrichtung 7 als Knick-Arm mit einem Drehgelenk 20 zwischen zwei Armsegmenten ausgebildet sein. Durch die Ausbildung mit gelenkigen Armen 11 kann der Zuteiler besonders vielseitig ausgebildet werden und für eine große Variation unterschiedlich ausgebildeter Schnittholzteile 2 verwendet werden. Fig. 1 und 2 zeigen eine bevorzugte Ausführungsform des Zuteilers, bei welcher die Bewegungsvorrichtungen 5,7 als gelenkige Arme 11 ausgebildet sind.
Der Arm 11 kann insbesondere an einem ersten Ende gelenkig gelagert sein und an einem zweiten Ende die Klemmbacke 6,8 aufweisen.
Weiters kann vorgesehen sein, dass eine Drehachse des Drehgelenkes 20 parallel zu der Quererstreckung des Zuteilers 1 verläuft. Insbesondere kann vorgesehen sein, dass sich der Arm 11 im Wesentlichen innerhalb einer normal zur Quererstreckung des Zuteilers 1 verlaufenden Ebene bewegt. Dadurch können eine Vielzahl an beweglichen Armen 11 entlang der Quererstreckung des Zuteilers 1 angeordnet werden, ohne sich in der Bewegung gegenseitig zu behindern.
Die Bewegung der Arme 11 kann insbesondere mittels einer Servosteuerung 21 erfolgen. Die Servosteuerung 21 kann mittels der Steuervorrichtung gesteuert werden.
Weiters kann vorgesehen sein, dass die erste Bewegungsvorrichtung 5 und/oder die zweite Bewegungsvorrichtung 7 einen entlang einer Schiene 22 vorgebbar bewegbaren Schlitten 23 umfasst, und dass die erste Klemmbacke 6 und/oder die zweite Klemmbacke 8 über ein Bewegungselement 24 bewegbar am Schlitten 23 angeordnet sind. Die Schienen 22 können insbesondere parallel zum Förderbereich verlaufen. Das Bewegungselement 24 erlaubt eine Bewegung der Klemmbacken 6,8 normal zur Bewegungsrichtung des Schlittens 23. Durch den Schlitten 23 kann die Bewegungsvorrichtung 5,7 besonders einfach ausgebildet werden, wobei eine Betätigung der Bewegungselemente 24 nur zum Einklemmen oder Freigeben des Schnittholzteils notwendig ist. Fig. 3 zeigt eine bevorzugte Ausführungsform des Zuteilers, bei welcher die Bewegungsvorrichtungen 5,7 Schlitten umfasst sind.

Besonders bevorzugt kann weiters vorgesehen sein, dass der Zuteiler 1 eine an einer dritten Bewegungsvorrichtung 12 angeordnete dritte Klemmbacke 13 und eine an einer vierten Bewegungsvorrichtung 14 angeordnete vierte Klemmbacke 15 aufweist, dass die dritte Klemmbacke 13 und die vierte Klemmbacke 15 eine weitere Klemmeinheit 16 ausbilden, um phasenverschoben zu der, von der ersten Klemmbacke 6 und der zweiten Klemmbacke 8 gebildeten, Klemmeinheit 10 ein weiteres Schnittholzteil 2 im Förderbereich 9 einzuklemmen und durch eine gleichgerichtete Bewegung der dritten Klemmbacke 13 und der vierten Klemmbacke 15 in einem eingeklemmten Zustand zu transportieren. Die weitere Klemmeinheit 16 kann hierbei entlang der Quererstreckung des Zuteilers 1 versetzt zur Klemmeinheit 10 angeordnet sein. Die weitere Klemmeinheit 16 kann analog zu der Klemmeinheit 10 betrieben werden. Durch die weitere Klemmeinheit 16 kann pro Bewegungszyklus des Zuteilers 1 ein zusätzliches Schnittholzteil 2 zugeteilt werden, wodurch noch höhere Taktraten des Mitnehmerförderers 4 möglich sind. In Fig. 1 ist die weitere Klemmeinheit 16 strichliniert dargestellt.

## Patentansprüche

1. Zuteiler (1) zum Zuteilen von Schnittholzteilen (2) von einem Stauförderer (3) zu einem Mitnehmerförderer (4), wobei der Zuteiler (1) eine, an einer ersten Bewegungsvorrichtung (5) angeordnete, erste Klemmbacke (6) und eine, an einer zweiten Bewegungsvorrichtung (7) angeordnete, zweite Klemmbacke (8) aufweist, wobei die erste Klemmbacke (6) und die zweite Klemmbacke (8) eine Klemmeinheit (10) ausbilden, um ein Schnittholzteil (2) in einem Förderbereich (9) einzuklemmen und durch eine gleichgerichtete Bewegung der ersten Klemmbacke (6) und der zweiten Klemmbacke (8) in einem eingeklemmten Zustand zu transportieren, wobei der Förderbereich (9) im Wesentlichen eben ist, **dadurch gekennzeichnet,** dass- in Betriebslage gesehen - die erste Bewegungsvorrichtung (5) unterhalb des Förderbereiches (9) angeordnet ist, und dass die erste Bewegungsvorrichtung (5) und/oder die zweite Bewegungsvorrichtung (7) als Knick-Arm (11) mit einem Drehgelenk (20) zwischen zwei Armsegmenten ausgebildet sind.

2. Zuteiler (1) nach Anspruch 1, **dadurch gekennzeichnet, dass** der Förderbereich (9) zwischen der ersten Bewegungsvorrichtung (5) und der zweiten Bewegungsvorrichtung (7) angeordnet ist.

3. Zuteiler (1) nach Anspruch 1 oder 2, **dadurch gekennzeichnet, dass** die zweite Bewegungsvorrichtung (7) oberhalb des Förderbereiches (9) angeordnet ist.

4. Zuteiler (1) nach einem der Ansprüche 1 bis 3, **dadurch gekennzeichnet, dass** der Zuteiler (1) eine an einer dritten Bewegungsvorrichtung (12) angeordnete dritte Klemmbacke (13) und eine an einer vierten Bewegungsvorrichtung (14) angeordnete vierte Klemmbacke (15) aufweist, dass die dritte Klemmbacke (13) und die vierte Klemmbacke (15) eine weitere Klemmeinheit (16) ausbilden, um phasenverschoben zu der, von der ersten Klemmbacke (6) und der zweiten Klemmbacke (8) gebildeten, Klemmeinheit (10) ein weiteres Schnittholzteil (2) im Förderbereich (9) einzuklemmen und durch eine gleichgerichtete Bewegung der dritten Klemmbacke (13) und der vierten Klemmbacke (15) in einem eingeklemmten Zustand zu transportieren.

5. Zuteilsystem (17) umfassend einen Stauförderer (3) und einen Mitnehmerförderer (4), **dadurch gekennzeichnet, dass** ein Zuteiler (1) nach einem der Ansprüche 1 bis 4 zwischen dem Stauförderer (3) und dem Mitnehmerförderer (4) angeordnet ist, um ein Schnittholzteil (2) von dem Stauförderer (3) zu dem Mitnehmerförderer (4) zu transportieren.

6. Zuteilsystem (17) nach Anspruch 5, **dadurch gekennzeichnet, dass** sich ein Mitnehmer (18) des Mitnehmerförderers (4) in einem Absetzbereich des Förderbereiches (9) mit einer Mitnehmergeschwindigkeit bewegt, und dass die Klemmeinheit (10) das Schnittholzteil (2) im Absetzbereich bei einer parallel zum Mitnehmer (18) erfolgenden Bewegung freigibt.

7. Zuteilsystem (17) nach Anspruch 5 oder 6, **dadurch gekennzeichnet, dass** der Stauförderer (3) in einem Aufgriffbereich des Förderbereiches (9) einen beweglichen Stauförderrückhaltehaken (19) umfasst.

8. Zuteilsystem (17) nach einem der Ansprüche 6 bis 7, **dadurch gekennzeichnet, dass** der Stauförderer (3) in einem Aufgriffbereich des Förderbereiches (9) ein, mit dem Zuteiler (1) wirkverbundenes, Sensorsystem aufweist, und dass eine Einklemmbewegung der Klemmeinheit (10) nur dann erfolgt, wenn vom Sensorsystem ein Schnittholzteil (2) im Aufgriffbereich erfasst ist.

9. Verfahren zum Zuteilen von Schnittholzteilen (2) mit einem Zuteiler (1), wobei ein Schnittholzteil (2) in einem Aufgriffbereich eines Förderbereiches (9) zwischen einer, an einer ersten Bewegungsvorrichtung (5) angeordneten, ersten Klemmbacke (6) und einer, an einer zweiten Bewegungsvorrichtung (7) angeordneten, zweiten Klemmbacke (8) eingeklemmt wird, wobei das Schnittholzteil (2) durch eine gleichgerichtete Bewegung der ersten Klemmbacke (6) und der zweiten Klemmbacke (8) in einem eingeklemmten Zustand durch den Förderbereich (9) transportiert und in einem Absetzbereich des Förderbereiches (9) wieder freigegeben wird, wobei das Schnittholzteil (2) in dem eingeklemmten Zustand im Wesentlichen in einer Ebene transportiert wird, **dadurch gekennzeichnet, dass** - in Betriebslage gesehen - die erste Bewegungsvorrichtung (5) unterhalb des Förderbereiches (9) angeordnet ist, und dass die erste Bewegungsvorrichtung (5) und/oder die zweite Bewegungsvorrichtung (7) als Knick-Arm (11) mit einem Drehgelenk (20) zwischen zwei Armsegmenten ausgebildet sind.

10. Verfahren nach Anspruch 9, **dadurch gekennzeichnet, dass** der Förderbereich (9) zwischen der ersten Bewegungsvorrichtung (5) und der zweiten Bewegungsvorrichtung (7) angeordnet ist

11. Verfahren nach Anspruch 9 oder 10, **dadurch gekennzeichnet, dass** sich ein Mitnehmer (18) des Mitnehmerförderers (4) in dem Absetzbereich des Förderbereiches (9) mit einer Mitnehmergeschwindigkeit bewegt, und dass das Schnittholzteil (2) im eingeklemmten Zustand auf die Mitnehmergeschwindigkeit beschleunigt wird und an den Mitnehmer (18) übergeben wird, und anschließend von der ersten Klemmbacke (6) und der zweiten Klemmbacke (8) freigegeben wird.

## Claims

1. Feeder (1) for feeding sawn timber parts (2) from an accumulation conveyor (3) to an entrainment conveyor (4), wherein the feeder (1) has a first clamping jaw (6) arranged on a first moving device (5) and second jaw (8) arranged on a second moving device (7), wherein the first clamping jaw (6) and the second clamping jaw (8) form a clamping unit (10) for clamping a sawn timber part (2) in a conveying region (9) and convey said part in a clamped state by an aligned movement of the first jaw (6) and the second jaw (8), wherein the conveying region (9) is substantially planar, **characterized in that** - as viewed in the operating position - the first moving device (5) is arranged below the conveying region (9), and that the first moving device (5) and/or the second moving device (7) are formed as an articulated arm (11) with a swivel joint (20) between two arm segments.

2. Feeder (1) according to claim 1, **characterized in that** the conveying region (9) is arranged between the first moving device (5) and the second moving device (7).

3. Feeder (1) according to claim 1 or 2, **characterized in that** the second moving device (7) is arranged above the conveying region (9).

4. Feeder (1) according to one of the claims 1 to 3, **characterized in that** the feeder (1) has a third clamping jaw (13) arranged on a third moving device (12) and a fourth clamping jaw (15) arranged on a fourth moving device (14), that the third clamping jaw (13) and the fourth clamping jaw (15) form a further clamping unit (16) in order to clamp a further sawn timber part (2) in the conveying region in a phase-shifted manner relative to the clamping unit (10) formed by the first clamping jaw (6) and the second clamping jaw (8) and to convey said timber part in a clamped state by an aligned movement of the third clamping jaw (13) and the fourth clamping jaw (15).

5. Feeding system (17) comprising an accumulation conveyor (3) and an entrainment conveyor (4), **characterized in that** a feeder (1) according to one of the claims 1 to 4 is arranged between the accumulation conveyor (3) and the entrainment conveyor (4) in order to convey a sawn timber part (2) from the accumulation conveyor (3) to the entrainment conveyor (4).

6. Feeding system (17) according to claim 5, **characterized in that** a driver (18) of the entrainment conveyor (4) moves in a depositing region of the conveying region (9) with an entrainment speed, and that the clamping unit (10) releases the sawn timber part (2) in the depositing region during a movement occurring parallel to the driver (18).

7. Feeding system (17) according to claim 5 or 6, **characterized in that** the accumulation conveyor (3) comprises a movable accumulation conveyor retaining hook (19) in a pickup region of the conveying region (9).

8. Feeding system (17) according to one of the claims 6 to 7, **characterized in that** the accumulation conveyor (3) comprises a sensor system which is operatively connected to the feeder (1) in a pickup region of the conveying region (9), and that a clamping movement of the clamping unit (10) only takes place when the sensor system detects a sawn timber part (2) in the pickup region.

9. Method for feeding sawn timber parts (2) to a feeder (1), wherein a sawn timber part (2) is clamped in a pickup region of a conveying region (9) between a first clamping jaw (6) arranged on a first moving device (5) and a second clamping jaw (8) arranged on a second moving device (7), wherein the sawn timber part (2) is conveyed in a clamped state by an aligned movement of the first clamping jaw (6) and the second clamping jaw (8) and is released again in a depositing region of the conveying area (9), wherein the sawn timber part (2) is conveyed in the clamped state substantially in a plane, **characterized in that** - as viewed in the operating position - the first moving device (5) is arranged below the conveying region (9), and that the first moving device (5) and/or the second moving device (7) are formed as an articulated arm (11) with a swivel joint (20) between two arm segments.

10. Method according to claim 9, **characterized in that** the conveying region (9) is arranged between the first moving device (5) and the second moving device (7).

11. method according to claim 9 or 10, **characterized in that** a driver (18) of the entrainment conveyor (4) moves in the depositing region of the conveying region (9) with an entrainment speed, and that the sawn timber part (2) is accelerated in the clamped state to the entrainment speed and is transferred to the driver (18), and is then released from the first clamping jaw (6) and the second clamping jaw (8).

## Revendications

1. Répartiteur (1) pour la répartition de pièces de bois découpées (2) d'un convoyeur d'accumulation (3) à un convoyeur d'entraînement (4), lequel répartiteur (1) présente un premiers mors de serrage (6) disposé sur un premier dispositif de déplacement (5) et un deuxième mors de serrage (8) disposé sur un deuxième dispositif de déplacement (7), dans lequel le premier mors de serrage (6) et le deuxième mors de serrage (8) forment une unité de serrage (10) destinée à serrer une pièce de bois découpée (2) dans une zone de convoyage (9) et à la transporter en la serrant par un mouvement dans la même direction du premier mors de serrage (6) et du deuxième mors de serrage (8), la zone de convoyage (9) étant sensiblement plane, **caractérisé en ce que**, dans la position de fonctionnement, le premier dispositif de déplacement (5) est disposé en dessous de la zone de convoyage (9) et **en ce que** le premier dispositif de déplacement (5) et/ou le deuxième dispositif de déplacement (7) sont conformés comme un bras articulé (11) avec une articulation pivotante (20) entre deux segments de bras.

2. Répartiteur (1) selon la revendication 1, **caractérisé en ce que** la zone de convoyage (9) est disposée entre le premier dispositif de déplacement (5) et le deuxième dispositif de déplacement (7).

3. Répartiteur (1) selon la revendication 1 ou 2, **caractérisé en ce que** le deuxième dispositif de déplacement (7) est disposé au-dessus de la zone de convoyage (9).

4. Répartiteur (1) selon l'une des revendications 1 à 3, **caractérisé en ce que** le répartiteur (1) présente un troisième mors de serrage (13) disposé sur un troisième dispositif de déplacement (12) et un quatrième mors de serrage (15) disposé sur un quatrième dispositif de déplacement (14), **en ce que** le troisième mors de serrage (13) et le quatrième mors de serrage (15) forment une autre unité de serrage (16) destinée à serrer une autre pièce de bois découpée (2) dans la zone de convoyage (9) et à la transporter en la serrant par un mouvement dans la même direction du troisième mors de serrage (13) et du quatrième mors de serrage (15), avec un décalage de phase par rapport à l'unité de serrage (10) formée par le premier mors de serrage (6) et le deuxième mors de serrage (8).

5. Système de répartition (17) comprenant un convoyeur d'accumulation (3) et un convoyeur d'entraînement (4), **caractérisé en ce qu'**un répartiteur (1) selon l'une des revendications 1 à 4 est disposé entre le convoyeur d'accumulation (3) et le convoyeur d'entraînement (4) pour transporter une pièce de bois découpée (2) du convoyeur d'accumulation (3) au convoyeur d'entraînement (4).

6. Système de répartition (17) selon la revendication 5, **caractérisé en ce qu'**un entraîneur (18) du convoyeur d'entraînement (4) se déplace dans une zone de dépose de la zone de convoyage (9) à une vitesse d'entraînement et **en ce que** l'unité de serrage (10) libère la pièce de bois découpée (2) dans la zone de dépose dans un mouvement parallèle à l'entraîneur (18).

7. Système de répartition (17) selon la revendication 5 ou 6, **caractérisé en ce que** le convoyeur d'accumulation (3) comporte, dans une zone de préhension de la zone de convoyage (9), un crochet de retenue d'accumulation (19) mobile.

8. Système de répartition (17) selon l'une des revendications 6 à 7, **caractérisé en ce que** le convoyeur d'accumulation (3) comporte, dans une zone de préhension de la zone de convoyage (9), un système de capteur en liaison active avec le répartiteur (1), et **en ce qu'**un mouvement de serrage de l'unité de serrage (10) n'est effectué que lorsque le système de capteur détecte une pièce de bois découpée (2) dans la zone de préhension.

9. Procédé pour la répartition de pièces de bois découpées (2) avec un répartiteur (1), dans lequel une pièce de bois découpée (2) est serrée dans une zone de préhension d'une zone de convoyage (9) entre un premiers mors de serrage (6) disposé sur un premier dispositif de déplacement (5) et un deuxième mors de serrage (8) disposé sur un deuxième dispositif de déplacement (7), la pièce de bois découpée (2) étant transportée dans l'état serré à travers la zone de convoyage (9) par un mouvement dans la même direction du premier mors de serrage (6) et du deuxième mors de serrage (8) et libérée dans une zone de dépose de la zone de convoyage (9), la pièce de bois découpée (2) étant transportée dans l'état serré sensiblement dans un plan, **caractérisé en ce que**, vu dans la position de fonctionnement, le premier dispositif de déplacement (5) se trouve en dessous de la zone de convoyage (9) et **en ce que** le premier dispositif de déplacement (5) et/ou le deuxième dispositif de déplacement (7) sont conformés comme des bras articulés (11) avec une articulation pivotante (20) entre deux segments de bras.

10. Procédé selon la revendication 9, **caractérisé en ce que** la zone de convoyage (9) est disposée entre le premier dispositif de déplacement (5) et le deuxième dispositif de déplacement (7)

11. Procédé selon la revendication 9 ou 10, **caractérisé en ce qu'**un entraîneur (18) du convoyeur d'entraînement (4) se déplace dans la zone de dépose de la zone de convoyage (9) à une vitesse d'entraînement et **en ce que** la pièce de bois découpée (2) dans l'état serré est accélérée jusqu'à la vitesse d'entraînement et transférée à l'entraîneur (18), puis libérée par le premier mors de serrage (6) et le deuxième mors de serrage (8).
